# EUROPÄISCHE PATENTANMELDUNG

(11) **EP 4 033 590 A1**
(43) Veröffentlichungstag der Anmeldung: **27.07.2022**
(21) Anmeldenummer: 22152009.1
(22) Anmeldetag: 18.01.2022
(51) Int. Cl.: H01M 50/105, H01M 50/121, H01M 50/124, H01M 50/129, H01M 50/131, H01M 50/141

(54) **POUCH-GEHÄUSE**

(30) Priorität: 21.01.2021 DE 102021200558
(71) Anmelder: VOLKSWAGEN AG, 38440 Wolfsburg (DE)
(72) Erfinder: SCHNORFEIL, Philipp, 38114 Braunschweig (DE)
(74) Vertreter: FDST Patentanwälte

(57) **Zusammenfassung**

Die Erfindung betrifft ein Pouch-Gehäuse (28) einer Batterie (14), mit einem aus einer ersten Metallfolie (34) erstellten hohlzylindrischen Mittelteil (30), dessen Stirnseiten jeweils mittels eines Seitenteils (32) verschlossen sind. Die Seitenteile (32) sind jeweils aus einer zweiten Metallfolie (48) erstellte topfförmige, einen Rand (46) und einen Boden (44) aufweisende Tiefziehteile. Ferner betrifft die Erfindung eine Batterie (14) mit einem Pouch-Gehäuse (28) sowie ein Verfahren (54) zur Herstellung einer Batterie (14).

## Beschreibung

Die Erfindung betrifft ein Pouch-Gehäuse einer Batterie sowie eine Batterie und ein Verfahren zur Herstellung einer Batterie.

In zunehmendem Maße werden Kraftfahrzeuge zumindest teilweise mittels eines Elektromotors angetrieben, sodass diese als Elektrofahrzeug oder Hybridfahrzeug ausgestaltet sind. Zur Bestromung des Elektromotors wird üblicherweise eine Hochvoltbatterie herangezogen, die mehrere einzelne Batteriemodule umfasst. Die Batteriemodule sind meist zueinander baugleich sowie miteinander elektrisch in Reihe und/oder parallel geschaltet, sodass die an der Hochvoltbatterie anliegende elektrische Spannung einem Vielfachen der mittels jedes der Batteriemodule bereitgestellten elektrischen Spannung entspricht. Jedes Batteriemodul wiederum umfasst mehrere Batterien, die meist in einem gemeinsamen Gehäuse angeordnet sind, und die miteinander elektrisch in Reihe und/oder parallel geschaltet sind.

Jede der Batterien wiederum umfasst üblicherweise mehrere Batteriezellen, die auch als galvanische Element bezeichnet werden. Diese weisen jeweils zwei Elektroden, nämlich eine Anode und eine Kathode, sowie einen dazwischen angeordneten Separator als auch einen Elektrolyten mit freibeweglichen Ladungsträgern auf. Als ein derartiger Elektrolyt wird beispielsweise eine Flüssigkeit herangezogen. In einer Alternative ist die Batterie als Festkörperbatterie ausgestaltet, und der Elektrolyt liegt als Festkörper vor.

Die Anode und die Kathode, die die Elektroden der Batterie bilden, umfassen üblicherweise einen Träger, der als Stromableiter fungiert. An diesem ist üblicherweise ein Aktivmaterial befestigt, das ein Bestandteil einer auf den Träger aufgebrachten Schicht ist. Hierbei ist es möglich, dass in der Schicht bereits der Elektrolyt vorhanden ist, oder dieser wird nachträglich eingebracht. Zumindest jedoch ist das Aktivmaterial zur Aufnahme der Arbeitsionen, z.B. Lithium-Ionen, geeignet. Je nach Verwendung als Anode oder Kathode wird ein anderes Material für den Träger und eine unterschiedliche Art des Materials der Schicht verwendet.

Zum Schutz der Batteriezellen sind diese üblicherweise in einem Gehäuse der Batterie angeordnet. Auch wird mittels des Gehäuses zudem der Elektrolyt vor Umwelteinflüssen geschützt.

In einer Ausführungsform ist das Gehäuse aus massivem Metall gefertigt, was einen vergleichsweisen hohen Schutz bietet. Dies erhöht jedoch das Volumen und das Gewicht der Batterie. Da die Batterien beim Kraftfahrzeug üblicherweise mittels weiterer Bestandteile, wie dem Gehäuse des Batteriemoduls, umgeben und daher geschützt sind, ist es möglich, das Gehäuse der Batterie vergleichsweise gewichtssparend auszugestalten und hierfür ein sogenanntes Pouch-Gehäuse zu verwenden. Bei diesem ist das Gehäuse aus einer Metallfolie erstellt. Somit ist ein Schutz verringert, jedoch ist es auch weiterhin möglich, die Batteriezellen der Batterien als gemeinsame Baueinheit zu bewegen und zu montieren, was eine Weiterverarbeitung vereinfacht.

In einer Ausführungsform ist die Metallfolie des Pouch Gehäuses direkt nach Art einer Verpackung um die Batteriezellen geschlagen, wobei die Metallfolie mehrmals genickt wird. Hierbei ist es möglich, dass im Bereich der Knickstellen eine übermäßige Beanspruchung der Metallfolie erfolgt, sodass dort ein Eindringen von Luft und ein Auslaufen des Elektrolyten erfolgen kann. In einer alternativen Ausführungsform sind zwei Schalen vorhanden, die aus der Metallfolie mittels Tiefziehens erstellt werden. Die Schalen werden randseitig aneinandergefügt und darin die einzelnen Batteriezellen eingeschlossen. Da die Metallfolie aus Gewichtsgründen jedoch lediglich eine vergleichsweise geringe Dicke aufweist, ist die maximale Tiefe beim Tiefziehen begrenzt, sodass auch das Volumen der Batteriezellen, die innerhalb eines derartigen Pouch-Gehäuses angeordnet sind, begrenzt ist. Infolgedessen ist eine Energiedichte einer derartigen Batterie reduziert. Auch ist eine Gestaltungsfreiheit der Batterie aufgrund der Einschränkungen durch das Pouch-Gehäuse reduziert.

Der Erfindung liegt die Aufgabe zugrunde, ein besonders geeignetes Pouch-Gehäuse einer Batterie, eine besonders geeignete Batterie und ein besonders geeignetes Verfahren zur Herstellung eine Batterie anzugeben, wobei vorteilhafterweise eine Energiedichte erhöht und/oder eine Gestaltungsfreiheit vergrößert ist.

Hinsichtlich des Pouch-Gehäuses wird diese Aufgabe durch die Merkmale des Anspruchs 1, hinsichtlich der Batterie durch die Merkmale des Anspruchs 8 und hinsichtlich des Verfahrens durch die Merkmale des Anspruchs 9 erfindungsgemäß gelöst. Vorteilhafte Weiterbildungen und Ausgestaltungen sind Gegenstand der jeweiligen Unteransprüche.

Das Pouch-Gehäuse ist im bestimmungsgemäßen Zustand ein Bestandteil einer Batterie. Hierfür ist das Pouch-Gehäuse geeignet, insbesondere vorgesehen und eingerichtet. Die Batterie wiederum umfasst zweckmäßigerweise zumindest zwei Elektroden, nämlich eine Anode und eine Kathode sowie einen dazwischen angeordneten Separator. Geeigneterweise ist mittels der beiden Elektroden und des Separators eine Batteriezelle gebildet, und Batterie weist mehrere derartige Batteriezellen auf, die jeweils über einen weiteren Separator oder ein sonstiges Element aneinander anliegen und vorzugsweise übereinandergestapelt sind. Die Batteriezelle/Batteriezellen sind dabei vorzugsweise mittels des Pouch-Gehäuses umgeben und somit zumindest teilweise geschützt.

Vorzugsweise ist die Batterie im bestimmungsgemäßen Zustand ein Bestandteil eines Kraftfahrzeugs. Hierfür ist die Batterie geeignet, insbesondere vorgesehen und eingerichtet. Im bestimmungsgemäßen Zustand ist die Batterie beispielsweise ein Bestandteil eines Energiespeichers des Kraftfahrzeugs, der mehrere derartige Batterien aufweist. Vorzugsweise sind hierbei die Batterien auf mehrere Batteriemodule aufgeteilt, die zueinander wiederum baugleich sind. Die Batterien sind insbesondere in einem Gehäuse des Energiespeichers bzw. des jeweiligen Batteriemoduls angeordnet und miteinander elektrisch parallel und/oder in Reihe geschaltet. Somit ist die an dem Energiespeicher/Batteriemodul anliegende elektrische Spannung ein Vielfaches der mittels jeder der Batterien bereitgestellten elektrischen Spannung. Zweckmäßigerweise sind sämtliche Batterien dabei zueinander baugleich, was eine Fertigung vereinfacht. Das Gehäuse des Energiespeichers bzw. des jeweiligen Batteriemoduls ist bevorzugt aus einem Metall gefertigt, beispielsweise einem Stahl, wie einem Edelstahl, oder einer AluminiumLegierung. Zur Herstellung wird zum Beispiel ein Druckgussverfahren verwendet. Insbesondere ist das Gehäuse des Energiespeichers bzw. des jeweiligen Batteriemoduls verschlossen ausgestaltet. Zweckmäßigerweise ist in das Gehäuse des Energiespeichers bzw. des jeweiligen Batteriemoduls eine Schnittstelle eingebracht, die einen Anschluss des Energiespeichers/Batteriemoduls bildet. Die Schnittstelle ist dabei elektrisch mit den Batterien kontaktiert, sodass ein Einspeisen von elektrischer Energie und/oder eine Entnahme von elektrischer Energie aus den Batterien von außerhalb des Energiespeichers möglich ist, sofern an den Anschluss ein entsprechender Stecker gesteckt ist.

Das Kraftfahrzeug ist bevorzugt landgebunden und weist vorzugsweise eine Anzahl an Rädern auf, von denen zumindest eines, vorzugsweise mehrere oder alle, mittels eines Antriebs angetrieben sind. Geeigneterweise ist eines, vorzugsweise mehrere, der Räder steuerbar ausgestaltet. Somit ist es möglich, das Kraftfahrzeug unabhängig von einer bestimmten Fahrbahn, beispielsweise Schienen oder dergleichen, zu bewegen. Dabei ist es zweckmäßigerweise möglich, das Kraftfahrzeug im Wesentlichen beliebig auf einer Fahrbahn zu positionieren, die insbesondere aus einem Asphalt, einem Teer oder Beton gefertigt ist. Das Kraftfahrzeug ist beispielsweise ein Nutzkraftwagen, wie ein Lastkraftwagen (Lkw) oder ein Bus. Besonders bevorzugt jedoch ist das Kraftfahrzeug ein Personenkraftwagen (Pkw).

Mittels des Antriebs erfolgt zweckmäßigerweise eine Fortbewegung des Kraftfahrzeugs. Zum Beispiel ist der Antrieb, insbesondere der Hauptantrieb, zumindest teilweise elektrisch ausgestaltet, und das Kraftfahrzeug ist beispielsweise ein Elektrofahrzeug. Der Elektromotor wird zum Beispiel mittels des Energiespeichers betrieben, der geeigneterweise als eine Hochvoltbatterie ausgestaltet ist. Mittels der Hochvoltbatterie wird zweckmäßigerweise eine elektrische Gleichspannung bereitgestellt, wobei die elektrische Spannung zum Beispiel zwischen 200 V und 800 V und beispielsweise im Wesentlichen 400 V beträgt. Vorzugsweise ist zwischen dem Energiespeicher und dem Elektromotor ein elektrischer Umrichter angeordnet, mittels dessen die Bestromung des Elektromotors eingestellt wird. In einer Alternative weist der Antrieb zusätzlich einen Verbrennungsmotor auf, sodass das Kraftfahrzeug als Hybrid-Kraftfahrzeug ausgestaltet ist. In einer Alternative wird mittels des Energiespeichers ein Niedervoltbordnetz des Kraftfahrzeugs gespeist, und mittels des Energiespeichers wird insbesondere eine elektrische Gleichspannung von 12 V, 24 V oder 48 V bereitgestellt.

In einer weiteren Alternative ist die Batterie ein Bestandteil eines Flurförderfahrzeug, einer Industrieanlage, eines handgeführten Geräts, wie beispielsweise eines Werkzeugs, insbesondere eines Akkuschraubers. In einer weiteren Alternative ist die Batterie ein Bestandteil einer Energieversorgung und wird dort beispielsweise als sogenannte Pufferbatterie verwendet. In einer weiteren Alternative ist die Batterie ein Bestandteil eines tragbaren Geräts, beispielsweise eines tragbaren Mobiltelefons, oder eines sonstigen Wearables. Auch ist es möglich, eine derartige Batterie im Campingbereich, Modellbaubereich oder für sonstige Outdoor-Aktivitäten zu verwenden.

Das Pouch-Gehäuse weist einen Mittelteil auf, der aus einer ersten Metallfolie gefertigt ist. Die erste Metallfolie ist dabei aus einem Metall gefertigt und weist zum Beispiel eine im Wesentlichen zweidimensionale Ausgestaltung auf, bevor der Mittelteil daraus erstellt wird. Insbesondere ist eine Dicke der ersten Metallfolie geringer als 0,1 mm. Der Mittelteil ist hohlzylindrisch ausgestaltet und wird insbesondere mittels Faltens oder Biegens der ersten Metallfolie erstellt. Dabei ist die erste Metallfolie zweckmäßigerweise rechteckförmig, was eine Herstellung erleichtert. Der Querschnitt des hohlzylindrischen Mittelteils ist beispielsweise beliebig und zum Beispiel rund, rechteckförmig oder auf die geometrische Form der etwaigen innerhalb des Pouch-Gehäuses angeordneten Batteriezellen angepasst. Insbesondere werden zur Erstellung des Mittelteils zwei gegenüberliegende Ränder der ersten Metallfolie aufeinandergelegt, sodass ein Überlapp gebildet ist. Zweckmäßigerweise erfolgt eine Befestigung der beiden Ränder aneinander, was eine Stabilität erhöht.

Der hohlzylindrische Mittelteil weist somit eine Zylinderachse sowie zwei Stirnseiten auf, die sich an gegenüberliegenden Enden des Mittelteils befinden und senkrecht zu der Zylinderachse angeordnet sind. Die beiden Stirnseiten sind jeweils mittels eines Seitenteils verschlossen. Vorzugsweise sind die beiden Seitenteile an dem Mittelteil befestigt, vorzugsweise fluiddicht. Somit ist ein Eintritt von einem Fluid und/oder Austritt hieraus vermieden. Beispielsweise sind die Seitenteile mit dem Mittelteil verschweißt oder verklebt. Insbesondere ist mittels des Mittelteils und der beiden Stirnseiten ein inneres Volumen vollständig umgeben, das insbesondere fluiddicht von der Umgebung des Pouch-Gehäuses abgetrennt ist.

Die beiden Seitenteile sind jeweils aus einer zweite Metallfolie erstellt. Dabei ist die zweite Metallfolie zum Beispiel aus dem gleichen Material und/oder in der gleichen Art und Weise wie die erste Metallfolie gefertigt, oder aus unterschiedlichen Materialien. Die zweite Metallfolie ist, bevor die Seitenteile erstellt werden, insbesondere im Wesentlichen zweidimensional ausgestaltet und/oder weist eine Dicke auf, die geringer als 0,1 mm ist. Die beiden Seitenteile werden mittels Tiefziehens aus der jeweiligen zweiten Metallfolie erstellt. Daher weisen die beiden Seitenteile einen Boden sowie einen Rand auf, der zweckmäßigerweise im Wesentlichen senkrecht zu dem jeweiligen Boden verläuft. Geeigneterweise ist der jeweilige Boden der beiden Seitenteile senkrecht zu der Zylinderachse des Mittelteils angeordnet. Insbesondere sind die beiden Seitenteile schalenartig ausgestaltet. Beispielsweise sind die beiden Seitenteile zueinander baugleich, spiegelverkehrt oder gänzlich voneinander abweichend ausgestaltet.

Bei den beiden Seitenteilen ist aufgrund des Herstellens als Tiefziehteil kein Knick oder eine sonstige mechanische übermäßige Beanspruchung vorhanden, sodass die Seitenteile jeweils eine vergleichsweise hohe Robustheit aufweisen. Hierbei ist es auch möglich, die Form der Seitenteile und somit auch den Querschnitt des Mittelteils beliebig anzupassen, weswegen eine Gestaltungsfreiheit des Pouch-Gehäuses erhöht ist. Der Abstand der beiden Seitenteile zueinander wird dabei nicht aufgrund der Vorgaben der zweiten Metallfolie und deren maximale Tiefziehtiefe vorgegeben, sondern aufgrund der Höhe des Mittelteils, also dessen Ausdehnung entlang der Zylinderachse. Diese kann im Wesentlichen beliebig gewählt werden, sodass wiederum eine vergleichsweise große Gestaltungsfreiheit vorliegt. Auch ist es möglich, eine Vergleichsweise große Zahl von Batteriezellen oder sonstigen Bestandteilen der Batterie innerhalb des Pouch-Gehäuses anzuordnen, und die Anzahl der maximal darin anordnenbaren Elemente ist nicht durch das Pouch-Gehäuse vorgegeben. Somit ist es möglich, bei der Batterie den Volumen- und/oder Gewichtsanteil des Pouch-Gehäuses an dem gesamten Volumen/Gewicht vergleichsweise gering zu wählen, weswegen eine Energiedichte der Batterie erhöht ist. Zudem ist es möglich, die Seitenteile unabhängig von dem Mittelteil zu fertigen, was eine Herstellung vereinfacht. Auch ist bei dem Pouch-Gehäuse kein vergleichsweise kompliziertes Umschlagen auf sich selbst oder eine sonstige Bearbeitung der zweiten Metallfolie erforderlich, weswegen eine Produktionszeit verkürzt ist. Auch sind keine Knickstellen vorhanden, die eine Robustheit des Pouch-Gehäuses verringern könnten.

Beispielsweise ist das Metall der ersten Metallfolie unterschiedlich zu dem Metall der zweiten Metallfolie. Zum Beispiel ist das Metall, aus dem zumindest eine der beiden Metallfolien erstellt ist, ein Magnesium oder Stahl. Besonders bevorzugt jedoch ist zumindest eine der beiden Metallfolien, vorzugsweise beide Metallfolien, aus einem Aluminium erstellt, und somit ist die erste Metallfolie und die zweite Metallfolie eine Aluminiumfolie. Auf diese Weise ist ein Gewicht des Pouch-Gehäuses weiter verringert.

Beispielsweise umgeben die Ränder den Mittelteil an dessen Umfangsseite teilweise. Besonders bevorzugt jedoch werden die Ränder umfangsseitig von dem Mittelteils umgeben und liegen zweckmäßigerweise direkt an diesem an, insbesondere abschnittsweise. Mit anderen Worten ist zwischen den Rändern und dem Mittelteil ein Überlapp gebildet. Somit werden die Ränder, die aufgrund des Tiefziehens eine verringerte Dicke aufweisen, mittels des Mittelteils von außen, als an der Umfangsseite, geschützt, was eine Robustheit erhöht. Auch ist aufgrund des Überlapps eine Dichtigkeit erhöht. Vorzugsweise werden die Ränder der Seitenteile vollständig von dem Mittelteil umgeben, was eine Robustheit weiter erhöht.

Beispielsweise sind die Böden der beiden Seitenteile in der Ebene der Stirnseite des Mittelteils angeordnet, sodass die Ränder in das Innere des Mittelteils hineinragen. Somit ist das Volumen, das mittels des Pouch-Gehäuses verschlossen wird, vergleichsweise groß. Besonders bevorzugt jedoch sind die Böden der beiden Seitenteile bezüglich des jeweiligen Rands ins Innere des Mittelteils versetzt, sodass die beiden Böden der beiden Seitenteile aufeinander zu versetzt sind und vollständig mittels des Mittelteils umgebenen sind. Insbesondere fluchten hierbei die Kanten der Ränder der Seitenteile mit der jeweiligen Kante des Mittelteils an den Stirnseiten. Somit werden die Böden mittels des Mittelteils geschützt, und bei einer Beschädigung einer Stirnseite des Mittelteils, beispielsweise aufgrund einer unsachgemäßen Handhabung. Dabei ist aufgrund des vorhandenen Überlapps zwischen den Rändern und dem Mittelteil auch weiterhin das von den beiden Seitenteilen und dem Mittelteil umgebene Volumen fluiddicht von der Umgebung abgetrennt.

Insbesondere sind das Mittelteil und die Seitenteile miteinander versiegelt, sodass ein Eindringen von Fremdpartikeln in das Pouch-Gehäuse sicher vermieden ist. Auch ist auf diese Weise eine fluiddichte Abdichtung vorhanden. Besonders bevorzugt ist hierfür die erste und die zweite Metallfolie im Bereich deren jeweiliger direkter mechanischen Anlage aneinander mit einer siegelfähigen ersten Kunststoffbeschichtung versehen. Mittels dieser erfolgt insbesondere eine Versiegelung der Seitenteile mit dem Mittelteil. Geeigneterweise erfolgt ebenfalls mittels der ersten Kunststoffbeschichtung eine Versiegelung des Mittelteils im Bereich dessen etwaigen Überlapps. Zum Versiegeln wird die erste Kunststoffbeschichtung zweckmäßigerweise zumindest teilweise erwärmt, beispielsweise das vollständige Pouch-Gehäuse, nachdem die Seitenteile an das Mittelteil gefügt wurden.

Zum Beispiel ist die erste Kunststoffbeschichtung zwischen der ersten und der zweiten Metallfolie unterschiedlich, oder zweckmäßigerweise sind diese beiden gleich. Vorzugsweise ist hierbei die erste Kunststoffbeschichtung bereits aufgetragen, bevor die Seitenteile an den Mittelteil gefügt werden, sodass eine Fertigung vereinfacht ist. Beispielsweise sind die erste und zweite Metallfolie, also das Mittelteil und die Seitenteile, lediglich in dem Bereich mit der erste Kunststoffbeschichtung versehen, in dem die direkte mechanische Anlage erfolgt. Somit ist ein Materialbedarf vergleichsweise gering. Besonders bevorzugt jedoch ist die erste und zweite Metallfolie, also das Mittelteil und die Seitenteile, jeweils auf seiner Seite vollflächig mittels der erste Kunststoffbeschichtung versehen. Insbesondere ist das Mittelteil an dessen Innenseite vollständig mittels der ersten Kunststoffbeschichtung versehen. Zweckmäßigerweise sind die beiden Seitenteile an deren Außenseite mittels der ersten Kunststoffbeschichtung versehen, insbesondere sofern die Ränder umfangsseitig von dem Mittelteil umgeben sind. Auf diese Weise ist eine Herstellung vereinfacht. Auch ist somit ein Toleranzausgleich geschaffen, beispielsweise wenn eines der Seitenteile nicht exakt bezüglich des Mittelteils positioniert wird. Dabei ist dennoch eine dichte Abdichtung zwischen diesen mittels der erste Kunststoffbeschichtung möglich.

Zum Beispiel unterscheidet sich die erste Kunststoffbeschichtung zwischen den beiden Metallfolien. Besonders bevorzugt jedoch wird jeweils das gleiche Material zur Herstellung der ersten Kunststoffbeschichtung verwendet. Insbesondere wird die erste Kunststoffbeschichtung aus Polypropylen erstellt, sodass es sich bei der ersten Kunststoffbeschichtung um eine Polypropylen-Beschichtung handelt. Somit ist eine Verarbeitung, insbesondere ein Versiegeln, vereinfacht, wobei eine fluiddichte Anlage realisiert werden kann.

Besonders bevorzugt sind das Mittelteil und die Seitenteile an der Außenseite mit einer zweiten Kunststoffbeschichtung versehen, wobei sich die zweite Kunststoffbeschichtung zwischen dem Mittelteil und den Seitenteilen beispielsweise unterscheidet. Besonders bevorzugt jedoch wird bei dem Mittelteil und den Seitenteilen jeweils die gleiche zweite Kunststoffbeschichtung verwendet. Die zweite Kunststoffbeschichtung ist insbesondere eine Polyamid-Beschichtung, und/oder mittels der zweiten Kunststoffbeschichtung wird eine Robustheit erhöht und das Metall der jeweiligen Metallfolie vor Umwelteinflüssen und Beschädigungen geschützt.

Insbesondere sind die Seitenteile auf einer deren Seiten vollständig mit der zweiten Kunststoffbeschichtung versehen. Die erste Metallfolie ist beispielsweise auf einer der beiden Seiten vollständig mit der zweite Kunststoffbeschichtung versehen. Besonders bevorzugt jedoch ist einer der Ränder dieser Seite frei von der zweite Kunststoffbeschichtung, und hier ist zweckmäßigerweise die erste Kunststoffbeschichtung vorhanden. In diesem Bereich erfolgt insbesondere die Herstellung des Überlapps des Mittelteils. Somit ist es bei der zweiten Kunststoffbeschichtung nicht erforderlich ein Material zu verwenden, mittels dessen eine fluiddichte Anbindung erfolgen kann. Beispielsweise wird die zweite Kunststoffbeschichtung erst nach Anbinden der Stirnseiten an dem Mittelteil aufgetragen, sodass ein vergleichsweises robustes Pouch-Gehäuse bereitgestellt ist. Alternativ hierzu sind die erste und/oder zweite Metallfolie vor Erstellung des Mittelteils bzw. der Seitenteile bereits mit der zweite Kunststoffbeschichtung versehen, was eine Fertigung vereinfacht.

Geeigneterweise ist der Querschnitt des Mittelteils rechteckförmige und beispielsweise quadratisch. Auf diese Weise sind eine Lagerhaltung sowie ein Fügen mehrerer Batterien aneinander vereinfacht. Insbesondere ist der Querschnitt nicht quadratisch, jedoch rechteckförmig, sodass zwei Längs- und zwei Schmalseiten des Mittelteils vorhanden sind. Auf diese Weise ist ein vergleichsweise effizientes Anordnen der etwaigen Elektroden innerhalb des Pouch-Gehäuses möglich. Beispielsweise befindet sich hierbei der Überlapp des Mittelteils an einer der Längsseiten. Besonders bevorzugt jedoch befindet sich der Überlapp der ersten Metallfolie an einer der Schmalseiten. Insbesondere ist hierbei die vollständige Schmalseite doppelwandig ausgeführt, sodass eine vergleichsweise große Dichtfläche vorhanden ist. Alternativ hierzu ist lediglich ein Teil der Schmalseite überlappend ausgestaltet, sodass ein Materialbedarf verringert ist. Da sich der Überlapp auf der Schmalseite befindet ist ein Platzbedarf des Pouch-Gehäuses verringert, weswegen wiederum eine Energiedichte der Batterie, die das Pouch-Gehäuse aufweist, erhöht ist.

Beispielsweise ist ein elektrischer Anschluss durch den Mittelteil oder eines der Seitenteile hindurchgeführt. Besonders bevorzugt jedoch ist der elektrische Anschluss zwischen einem der Seitenteile und dem Mittelteil hindurchgeführt. Somit ist kein Durchbruch in einem der Seitenteile oder im Mittelteil vorhanden, und es ist keine Maßnahme zur Herstellung einer Dichtheit in diesem Bereich erforderlich. Insbesondere ist der elektrische Anschluss im Bereich der direkten mechanischen Anlage an dem Seitenteil und an dem Mittelteil mittels der etwaigen ersten Kunststoffbeschichtung versehen oder zumindest mit den Seitenteilen und dem Mittelteil versiegelt, sodass auch dort eine fluiddichte Ausgestaltung des Pouch-Gehäuses realisiert ist.

Mittels des elektrischen Anschlusses erfolgt vorzugsweise eine elektrische Verbindung zwischen dem inneren Bereich des Pouch-Gehäuses und dem äußeren Bereich, sodass ein Einspeisen und/oder Entnahme von elektrischer Energie in das Pouch-Gehäuse bzw. heraus ermöglicht ist. Vorzugsweise umfasst das Pouch-Gehäuse zwei derartige elektrische Anschlüsse, die sich beispielsweise an gegenüberliegenden Stirnseiten des Mittelteils oder an der gleichen Stirnseite befinden. Der elektrische Anschluss ist zweckmäßigerweise aus einem Metall gefertigt, vorzugsweise einem Kupfer. Insbesondere ist im Bereich der Anlage an dem Seitenteil und/oder dem Mittelteil eine Beschichtung, wie die erste Kunststoffbeschichtung oder eine weitere Beschichtung, vorhanden, sodass ein elektrischer Kurzschluss zwischen dem elektrischen Anschluss und dem Mittelteil bzw. dem Seitenteil vermieden ist.

Die Batterie weist ein Pouch-Gehäuse auf, das einen Mittelteil umfasst, der aus einer erste Metallfolie erstellt und hohlzylindrisch ausgeführt ist. Die beiden Stirnseiten des Mittelteils sind jeweils mittels eines Seitenteils verschlossen, wobei jedes der Seitenteile jeweils aus einer zweiten Metallfolie erstellt ist. Die Seitenteile sind dabei topfförmig/schalenförmig und weisen daher einen Rand und einen Boden auf. Zudem sind die beiden Seitenteile Tiefziehteile und somit mittels eines Tiefziehverfahrens erstellt. Insbesondere ist das Pouch-Gehäuse fluiddicht ausgestaltet.

Innerhalb des Pouch-Gehäuses ist eine Batteriezelle angeordnet, die insbesondere ein galvanisches Element ist, und die zwei Elektroden nämlich eine Anode und eine Kathode, und einen dazwischen angeordneten Separator aufweist. Somit ist die Batteriezelle mittels des Pouch-Gehäuses umgeben. Vorzugsweise umfasst jede Elektrode einen Träger, der auch als Ableiter bezeichnet wird. Zwischen den beiden Trägern ist ein Aktivmaterial angeordnet, das zur Aufnahme von Arbeitsionen, wie Lithium-Ionen, geeignet sowie vorgesehen und eingerichtet ist. Als Aktivmaterial wird beispielsweise ein Lithium-Metall-Oxid, wie Lithium-Cobalt(III)-Oxid (LiCoO2), NMC, NCA, LFP, GIC, LTO verwendet. Alternativ wird als Aktivmaterial NMC622 oder NMC811 herangezogen. Beispielsweise ist dabei das Aktivmaterial einer der Elektroden zugeordnet. Besonders bevorzugt jedoch ist jeder der Elektroden jeweils ein Aktivmaterial zugeordnet, wobei sich die beiden Aktivmaterialien beispielsweise unterscheiden.

Die Batteriezelle weist vorzugsweise einen Elektrolyten auf, der eine Anzahl an freibeweglichen Ladungsträger, nämlich die Lithium-Ionen, bereitstellt. Beispielsweise ist der Elektrolyt ein Bestandteil der Anode und/oder Kathode, vorzugsweise des jeweiligen Aktivmaterials, oder ist zumindest geeignet, sich dort anzulagern und somit von diesen aufgenommen zu werden. Die Batteriezelle ist beispielsweise eine Festkörperbatterie, sodass der Elektrolyt als Festkörper vorliegt. Alternativ ist der Elektrolyt flüssig. Mittels des Pouch-Gehäuses wird insbesondere ein Austritt des Elektrolyten verhindert und/oder ein Gelangen von Umgebungsluft zu dem Elektrolyten und/oder dem Aktivmaterial verhindert, sodass eine ungewollte chemische Reaktion zwischen diesen vermieden wird.

Beispielsweise umfasst die Batterie mehrere derartige Batteriezellen, die übereinander gestapelt sind, und beispielsweise über jeweils einen weiteren Separator oder ein sonstiges Element aneinander anliegen. Hierbei umgibt das Pouch-Gehäuse vorzugsweise sämtliche Batteriezellen der Batterie. Alternativ ist die Batteriezelle zu einem Zylinder gewickelt, und insbesondere als sogenannte "Jelly Roll" ausgestaltet. Zum Beispiel ist die Batterie eine Sekundärbatterie.

Vorzugsweise sind hierbei die elektrischen Anschlüsse vorhanden, die zumindest auf einer der beiden Seiten des Mittelteils zwischen dem Mittelteil und dem jeweiligen Seitenteil herausgeführt sind. Im Inneren des Pouch-Gehäuses sind die elektrischen Anschlüsse jeweils mit einer der Batteriezellen elektrisch kontaktiert vorzugsweise mit jeweils einer der Elektroden.

Das Verfahren zur Herstellung einer Batterie mit einem Pouch-Gehäuse mit einem aus einer ersten Metallfolie erstellten hohlzylindrischen Mittelteil, dessen Stirnseiten jeweils mittels eines Seitenteils verschlossen sind, wobei die Seitenteile jeweils aus einer zweiten Metallfolie erstellte topfförmige, einen Rand und einen Boden aufweisende Tiefziehteile sind, in welchem eine Batteriezelle mit zwei Elektroden und einem dazwischen angeordneten Separator angeordnet ist, sieht vor, dass in einem ersten Arbeitsschritt die Batteriezelle mit den zwei Elektroden und dem dazwischen angeordneten Separator bereitgestellt wird.

Beispielsweise ist die Batteriezelle aufgewickelt, sodass eine "Jelly Roll" bereitgestellt ist. In einer Alternative werden mehrere derartige Batteriezellen bereitgestellt, die jeweils flächig ausgestaltet sind, und die zu einem Stapel aufeinander geschichtet sind. Insbesondere wird die Batteriezelle mit einem elektrischen Anschluss elektrisch kontaktiert, wobei beispielsweise jede der Elektroden der gleichen Batteriezelle mit jeweils einem der elektrischen Anschlüsse elektrisch kontaktiert ist. Sofern mehrere Batteriezellen vorhanden sind, sind beispielsweise sämtliche Anoden und sämtliche Kathoden jeweils mit dem gleichen elektrischen Anschluss elektrisch kontaktiert, oder lediglich die den Stapel an den Enden begrenzenden Batteriezellen sind jeweils mit einem der elektrischen Anschlüsse elektrisch kontaktiert.

In einem weiteren Arbeitsschritt wird eine erste Metallfolie um die Batteriezelle geschlagen. Sofern mehrere Batteriezellen vorhanden sind, werden hierbei sämtliche Batteriezellen mittels der ersten Metallfolie umgeben. Mittels des Schlagens/Wickelns der ersten Metallfolie um die Batteriezelle wird ein hohlzylindrischer Mittelteil erstellt. Die erste Metallfolie ist insbesondere rechteckförmig, und zwei gegenüberliegende Ränder der ersten Metallfolie werden zur Herstellung des hohlzylindrischen Mittelteils übereinandergelegt, sodass ein Überlapp realisiert ist. Vorzugsweise ist die erste Metallfolie im Bereich des Überlapps mit einer ersten Kunststoffbeschichtung versehen, die siegelfähig ist. Geeigneterweise wird die erste Metallfolie im Bereich des Überlapps versiegelt, sodass dort eine fluiddichte Verbindung realisiert ist. Die Größe des ersten Metallfolie ist insbesondere auf die Größe der Batteriezelle(n) angepasst.

In einem dritten Arbeitsschritt, der zeitlich unabhängig von dem ersten und zweiten Arbeitsschritt durchgeführt wird, wird aus zwei zweiten Metallfolien jeweils ein Seitenteil mittels Tiefziehens erstellt. Die beiden Seitenteile weisen nach dem Tiefziehen einen Rand und einen Boden auf. Zusammenfassend werden zwei zweite Metallfolien bereitgestellt, und aus jeder der zweiten Metallfolien wird jeweils eines der Seitenteile erstellt.

In einem vierten Arbeitsschritt wird der Mittelteil an dessen Stirnseiten mittels jeweils einer der Seitenteile verschlossen. Mit anderen Worten wird an jede der Stirnseiten jeweils eines der Seitenteile positioniert und vorzugsweise an dem Mittelteil befestigt, geeigneterweise fluiddicht. Somit ist die Batteriezelle mittels des Mittelteils sowie der Seitenteile umgeben, die insbesondere ein Pouch-Gehäuse bilden oder zumindest einen Teil hiervon. Vorzugsweise werden bei dem Verschließen des Mittelteiles die etwaigen elektrischen Anschlüsse zwischen dem Mittelteil und zumindest einem der Seitenteile hindurchgeführt, sodass eine elektrische Kontaktierung der Batteriezelle von außerhalb des Pouch-Gehäuses möglich ist.

Die im Zusammenhang mit dem Pouch-Gehäuse beschriebenen Vorteile und Weiterbildungen sind sinngemäß auch auf die Batterie/das Verfahren und untereinander zu übertragen und umgekehrt.

Nachfolgend wird ein Ausführungsbeispiel der Erfindung anhand einer Zeichnung näher erläutert. Darin zeigen:
- Fig. 1: schematisch vereinfacht ein Kraftfahrzeug, das eine Hochvoltbatterie mit mehreren baugleichen Batterien aufweist,
- Fig. 2: in einer Schnittdarstellung schematisch eine der ein Pouch-Gehäuse aufweisenden Batterien,
- Fig. 3, 4: jeweils perspektivisch ausschnittsweise das einen Mittelteil, zwei elektrische Anschlüsse und zwei Seitenteile aufweisende Pouch-Gehäuse,
- Fig. 5: in einer Schnittdarstellung schematisch das Pouch-Gehäuse,
- Fig. 6: in einer Schnittdarstellung schematisch das Pouch-Gehäuse, im Bereich eines Überlapps des Mittelteils,
- Fig. 7: in einer Schnittdarstellung schematisch das Pouch-Gehäuse, im Bereich eines der elektrischen Anschlüsse, und
- Fig. 8: ein Verfahren zur Herstellung der Batterie.

Einander entsprechende Teile sind in allen Figuren mit den gleichen Bezugszeichen versehen.

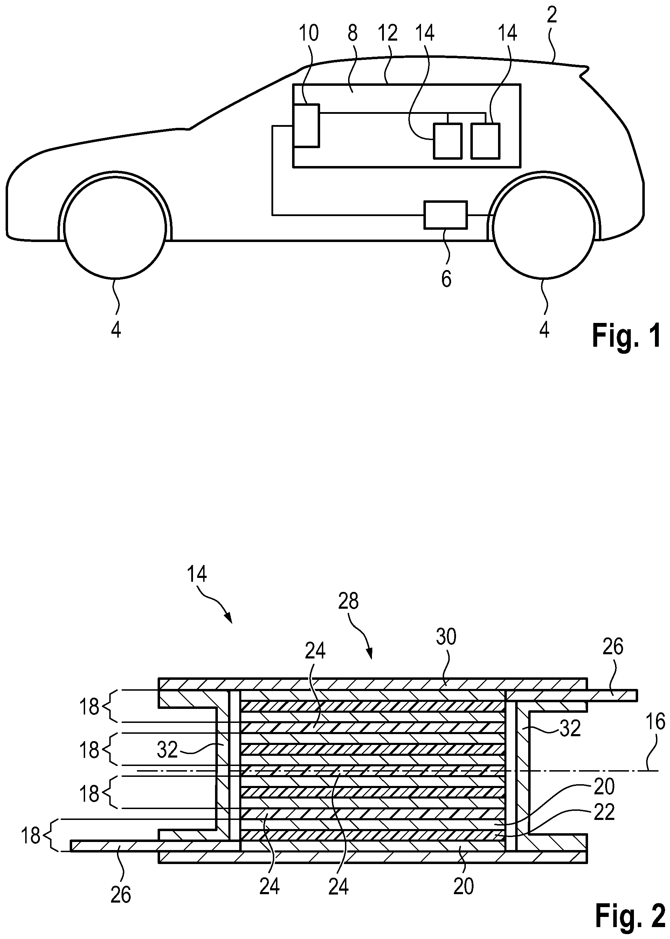

In Figur 1 ist schematisch vereinfacht ein Kraftfahrzeug 2 in Form eines Personenkraftwagens (Pkw) dargestellt. Das Kraftfahrzeug 2 weist eine Anzahl an Rädern 4 auf, von denen zumindest einige mittels eines Antriebs 6 angetrieben sind, der einen Elektromotor umfasst. Somit ist das Kraftfahrzeug 2 ein Elektrofahrzeug oder ein Hybrid-Fahrzeug. Der Antrieb 6 weist einen Umrichter auf, mittels dessen der Elektromotor bestromt ist. Der Umrichter des Antriebs 6 wiederum ist mittels eines Energiespeichers 8 in Form einer Hochvoltbatterie bestromt. Hierfür ist der Antrieb 6 mit einer Schnittstelle 10 des Energiespeichers 8 verbunden, die in ein Gehäuse 12 des Energiespeichers 8 eingebracht ist, das aus einem Edelstahl erstellt ist. Innerhalb des Gehäuses 12 des Energiespeichers 8 sind mehrere Batteriemodule angeordnet, von denen ein Teil der Batteriemodule zueinander elektrisch in Reihe und diese wiederum elektrisch zueinander parallel geschaltet sind. Der elektrische Verband der Batteriemodule ist mit der Schnittstelle 10 elektrisch kontaktiert, sodass bei Betrieb des Antriebs 6 ein Entladen oder Laden (Rekuperation) der Batteriemodule 14 erfolgt. Aufgrund der elektrischen Verschaltung ist dabei die an der Schnittstelle 10 bereitgestellte elektrische Spannung, die 400 V beträgt, ein Vielfaches der mit den zueinander baugleichen Batteriemodule jeweils bereitgestellten elektrischen Spannung.

Jedes der Batteriemodule wiederum umfasst mehrere Batterien 14, von denen hier zwei dargestellt sind. Die Batterien 14 jedes Batteriemoduls sind elektrisch miteinander zum Teil parallel und anderenfalls elektrisch in Reihe geschaltet, sodass die mittels jedes Batteriemoduls bereitgestellte elektrische Spannung einem Vielfachen der mittels einer der Batterien 14 bereitgestellten elektrischen Spannung beträgt.

In Figur 2 ist in einer Schnittdarstellung entlang einer Längsachse 16 eine der zueinander baugleichen Batterien 14 dargestellt. Die Batterie 14 weist mehrere Batteriezellen 18 auf, von denen hier vier gezeigt sind, und die zu einem Stapel aufeinandergestapelt sind. Jede der Batteriezellen 18 weist zwei Elektroden 20, nämlich eine Anode und eine Kathode, auf, die jeweils flächig ausgestaltet sind, und zwischen denen ein Separator 22 angeordnet ist und an diesen anliegt. Jeweils benachbarte Batteriezellen 18 liegen über einen weiteren Separator 24 aneinander an. Die Elektroden 22 umfasst einen nicht näher dargestellten den Ableiter oder Träger, der mit einem Aktivmaterial versehen ist, wie NMC. Der Ableiter der Anode ist aus Kupfer und der Ableiter der Kathode aus Aluminium erstellt. Insbesondere sind die Ableiter jeweils folienförmig, sodass eine Dicke der Batteriezellen 18 vergleichsweise gering ist.

Die Elektroden 20, die den auf diese Weise gebildeten Stapel an dem jeweiligen Ende begrenzen, sind jeweils einem elektrischen Anschlüsse 26 elektrisch kontaktiert, der jeweils mittels eines Kupfer Blechstreifens gebildet ist. Der aus den Batteriezellen 18 gebildet Stapel ist innerhalb eines Pouch-Gehäuses 28 angeordnet und mittels dessen umfangsseitig vollständig umgeben. Das Pouch-Gehäuse 28 umfasst einen Mittelteil 30, der sich entlang der Längsachse 16 erstreckt. Die beiden Stirnseiten des hohlzylindrischen Mittelteils 30 sind jeweils mittels eines Seitenteils 32 verschlossen, die jeweils im Wesentlichen senkrecht zur Längsachse 16 angeordnet sind.

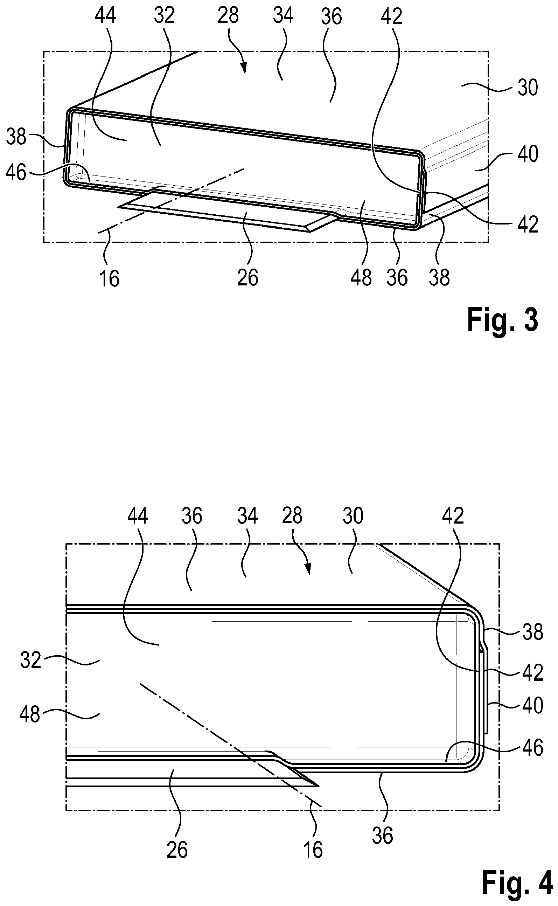

In den Figuren 3 und 4 ist perspektivisch das Pouch-Gehäuse 28 ausschnittsweise dargestellt. Der Mittelteil 30 ist aus einer ersten Metallfolie 34 gefertigt, die rechteckförmig ist, und die um den Stapel der Batteriezellen 18 herumgeschlagen ist, sodass die Hohlzylinderform gebildet ist. Hierbei ist der Querschnitt des Hohlzylinders rechteckförmig mit abgerundeten Ecken, sodass zwei Längsseiten 36 und zwei Schmalseiten 38 gebildet sind. An einer der beiden Schmalseiten 38 sind die zwei der sich gegenüberliegenden Ränder der ersten Metallfolie 34 auf sich selbst umgeschlagen, sodass ein Überlapp 40 gebildet ist. Im Bereich des Überlapps 40 ist die erste Metallfolie 34 auf den sich jeweils berührenden Bereichen mit einer ersten Kunststoffbeschichtung 42 versehen, die aus Polypropylen besteht. Diesen ist nach Erstellen des Überlapps 40 teilweise erwärmt und nachfolgend abgekühlt worden, sodass die erste Metallfolie 34 im Bereich des Überlapps 40 mittels der ersten Kunststoffbeschichtung 42 versiegelt ist und eine fluiddichte Verbindung erstellt wurde. Zusammenfassend weist der Mittelteil 30 einen rechteckförmigen Querschnitt senkrecht zur Längsachse 16 auf, wobei der Überlapp 40 der ersten Metallfolie 34 sich an einer der Schmalseiten 38 befindet.

Die beiden Seitenteile 32 sind schalen- oder topfförmig und weisen jeweils einen Boden 44 auf, der in einen hierzu senkrecht verlaufenden Rand 46 übergeht. Die beiden Seitenteile 32 sind jeweils Tiefziehteile, also mittels Tiefziehens erstellt, und aus einer zweiten Metallfolie 48 gefertigt. Zusammenfassend weist das Pouch-Gehäuse 28 den aus der ersten Metallfolie 34 erstellten hohlzylindrischen Mittelteil 30 auf, dessen Stirnseiten jeweils mittels eines der Seitenteile 32 fluiddicht verschlossen sind, wobei die Seitenteile 32 jeweils aus der zweiten Metallfolie 48 erstellte topfförmige, den jeweiligen Rand 46 und den jeweiligen Boden 44 aufweisende Tiefziehteile sind. An gegenüberliegenden Stirnseiten ist zwischen dem Mittelteil 30 und dem jeweiligen Seitenteil 32 jeweils einer der elektrischen Anschlüsse 26 hindurchgeführt. Somit befinden sich die elektrischen Anschlüsse 26 an gegenüberliegenden Stirnseiten des Mittelteils 30.

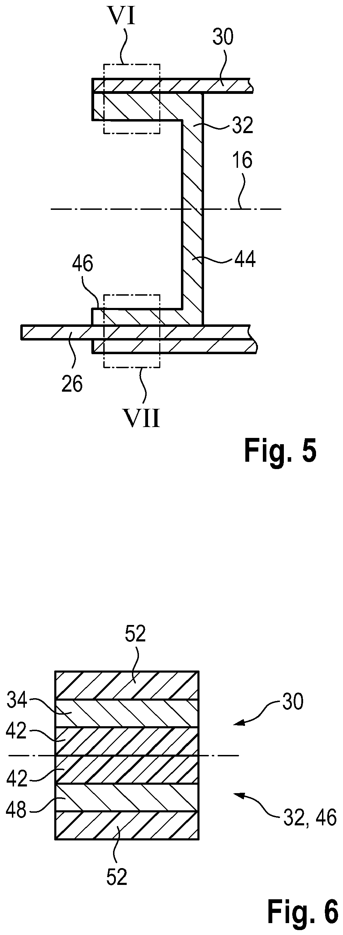

Wie auch in Figur 5 in einer Schnittdarstellung entlang der Längsachse 16 gezeigt, sind die Ränder 46 des jeweiligen Seitenteils 32 umfangsseitig von dem Mittelteil 30 umgeben und liegen an diesem direkt an. Somit sind die Seitenteile 32 in das Mittelteil 30 von gegenüberliegenden Seiten eingeführt. Die Böden 44 sind senkrecht zur Längsachse 16 angeordnet und bezüglich der Ränder 46 ins Innere des Mittelteils 30 versetzt, sodass die Böden 44 jeweils vollständig von dem Mittelteil 30 umgeben und von den Stirnseiten des Mittelteils 30 in dessen Innere hinein versetzt sind. Folglich weisen die Ränder 46 entlang der Längsachse 16 bezüglich des Pouch-Gehäuses 28 nach außen. Die Seitenteile 32 sind dabei derart positioniert, dass die Kanten der Ränder 46 mit der Kante des Mittelteils 30, also dessen Ende entlang der Längsrichtung 16 fluchtet. Infolgedessen werden die Ränder 46, die aufgrund des Tiefziehens eine verringerte Dicke aufweisen, mittels des Mittelteils 30 stabilisiert, und auch vor äußeren mechanischen Beschädigungen geschützt.

In Figur 6 ist schematisch vereinfacht und vergrößert der Bereich der direkten Anlage des Mittelteils 30 an dem Rand 46 eines der Seitenteile 32 gezeigt. Die erste Metallfolie 34 ist eine Aluminiumfolie, ebenso wie die zweite Metallfolie 48, die somit aus dem gleichen Material erstellt sind. Auch weisen diese die gleiche Dicke auf und sind aus der gleichen Folienrolle oder Bogenware erstellt. Im Bereich der direkten mechanischen Anlage der beiden Metallfolien 34, 48, also des Mittelteils 30 an dem Rand 46 des jeweiligen Seitenteils 32, sind die beiden Metallfolien 34, 48 ebenfalls mit der ersten Kunststoffbeschichtung 42 versehen, nämlich Polypropylen. Zum Verbinden der Seitenteile 32 mit dem Mittelteil 30 erfolgt teilweise ein Aufschmelzen der ersten Kunststoffbeschichtung 42, und somit eine Versiegelung der beiden Metallfolien 34, 48 miteinander. Infolgedessen ist zwischen diesen eine fluiddichte Verbindung erstellt. Hierbei sind die topfförmigen Seitenteile 32 an deren vollständiger Außenseite mit der ersten Kunststoffbeschichtung 42 versehen, sodass ein Toleranzausgleich möglich ist.

Auf der gegenüberliegenden Seite sind die erste und zweite Metallfolie 34, 48 mit einer zweiten Kunststoffbeschichtung 52 versehen, die bei beiden Metallfolien 34, 48 wiederum gleich ist und aus Polyamid erstellt ist. Somit wird die jeweilige Metallfolie 34, 48 mittels der zweiten Kunststoffbeschichtung 52 geschützt. Die erste Metallfolie 34 ist jedoch im Bereich des Überlapps 40 an dem nach innen versetzten Rand nicht mit der zweiten Kunststoffbeschichtung 52, sondern mit der ersten Kunststoffbeschichtung 42 versehen, sodass dort die Versiegelung erfolgen kann. Zusammenfassend sind das Mittelteil 30 und die Seitenteile 32 an deren Außenseite jeweils mit der zweiten Kunststoffbeschichtung 52 versehen. Mit anderen Worten weisen die schalenartigen Seitenteile 32 an deren jeweiliger Innenseite die zweite Kunststoffbeschichtung 52 auf.

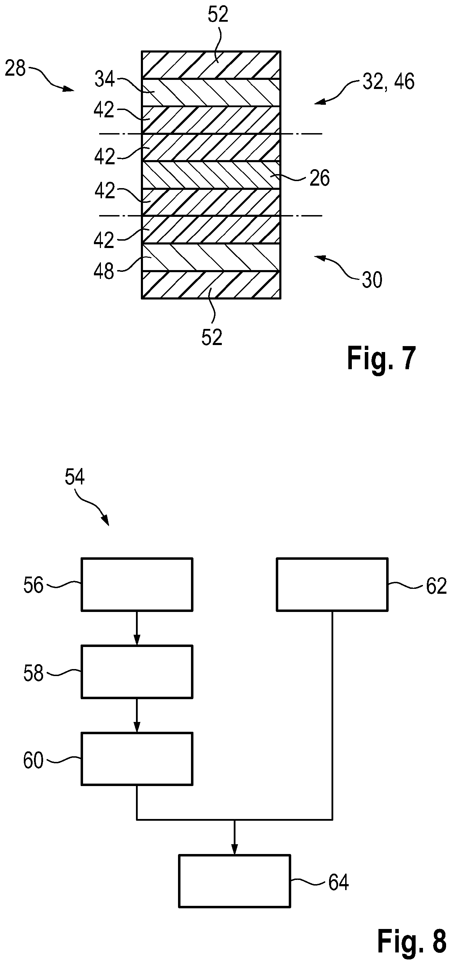

In Figur 7 ist das Pouch-Gehäuse 28 ausschnittsweise im Bereich des elektrischen Anschlusses 26 gezeigt, der sich zwischen dem Mittelteil 30 und dem jeweiligen Seitenteil 20 befindet. Auch hier sind die beiden Metallfolien 34, 48 an einander zugewandten Seiten jeweils mit der ersten Kunststoffbeschichtung 42 versehen. Ferner ist der elektrische Anschluss 26 im Bereich der direkten Anlage an dem Mittelteil 30 sowie dem Seitenteil 32 mit der ersten Kunststoffbeschichtung 42 versehen, sodass auch dort eine Versiegelung erfolgen kann und somit die fluiddichte Verbindung. Folglich ist auch dort ein Eindringen von Partikeln in das Pouch-Gehäuse 28 oder ein Auslaufen einer Flüssigkeit aus dem Pouch-Gehäuse 28 heraus vermieden. Die erste und zweite Metallfolie 34, 48 sind in diesem Bereich auf den einander abgewandten Seiten ebenfalls mit der zweiten Kunststoffbeschichtung 52 versehen.

In Figur 8 ist ein Verfahren 54 zur Herstellung der Batterie 14 gezeigt. In einem ersten Arbeitsschritt 56 werden die Batteriezellen 18 mit den jeweils beiden Elektroden 20 und dem jeweils dazwischen angeordneten Separator 22 bereitgestellt und diese werden über den jeweiligen weiteren Separator 24 übereinander gestapelt.

In einem sich anschließenden zweiten Arbeitsschritt 58 wird der Stapel aus Batteriezellen 18 mit der ersten Metallfolie 34 umwickelt, sodass das hohlzylindrischen Mittelteil 30 erstellt ist. Die erste Metallfolie 34 ist hierbei bereits entsprechend mit der ersten Kunststoffbeschichtung 42 sowie der zweiten Kunststoffbeschichtung 52 versehen. Bei dem Umwickeln erfolgt zudem die Erstellung des Überlapps 40, und die erste Metallfolie 34 wird mittels der ersten Kunststoffbeschichtung 42 in diesem Bereich versiegelt.

In einem sich anschließenden dritten Arbeitsschritt 60 werden die elektrischen Anschlüsse 26 mit dem entsprechenden Batteriezellen 18 elektrisch verbunden und geeignet positioniert. Hierbei stehen die elektrischen Anschlüsse 26 über den Mittelteil 30 über. In einer alternativen Ausführungsform werden bereits nach Bereitstellen der Batteriezellen 18 die elektrischen Anschlüsse 26 mit den jeweiligen Batteriezellen 18 elektrisch kontaktiert, und erst im Anschluss hieran der Stapel mit der ersten Metallfolie 34 umwickelt und somit die erste Metallfolie 34 zur Herstellung des hohlzylindrischen Mittelteils 30 um die Batteriezellen 18 geschlagen.

In einem vierten Arbeitsschritt 62, der zeitlich unabhängig von dem ersten bis dritten Arbeitsschritt 56-60 erfolgt, werden aus den zweiten Metallfolien 48 mittels Tiefziehens die Seitenteile 32 erstellt. In einer Ausführungsform sind bereits vor dem Tiefziehen die zweiten Metallfolien 48 auf einer deren Seiten mit der ersten Kunststoffbeschichtung 42 und auf der verbleibenden Seite mit der zweiten Kunststoffbeschichtung 52 versehen. In einer Alternative erfolgt erst nach dem Tiefziehen das Versehen mit den beiden Kunststoffbeschichtungen 42, 52.

In einem sich anschließenden fünften Arbeitsschritt 64 werden die beiden Seitenteile 32 von den Stirnseiten her teilweise in das Mittelteil 30 eingeführt und entsprechend positioniert, sodass der Mittelteil 30 mit den Seitenteilen an dessen Stirnseiten verschlossen ist. Im Anschluss hieran erfolgt ein Versiegeln mittels der ersten Kunststoffschichten 42, sodass die Seitenteile 32 mit dem Mittelteil 30 sowie gegebenenfalls mit den elektrischen Anschlüssen 26 versiegelt sind. Somit ist das Pouch-Gehäuse 28 fluiddicht ausgestaltet. Mit Abschluss des fünften Arbeitsschritts 64 ist das Pouch-Gehäuses 28 vollendet und auch die Batterie 14 vollständig erstellt.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

### Bezugszeichenliste

- 2: Kraftfahrzeug
- 4: Rad
- 6: Antrieb
- 8: Energiespeicher
- 10: Schnittstelle
- 12: Gehäuse des Energiespeichers
- 14: Batterie
- 16: Längsachse
- 18: Batteriezelle
- 20: Elektrode
- 22: Separator
- 24: weiterer Separator
- 26: elektrischer Anschluss
- 28: Pouch-Gehäuse
- 30: Mittelteil
- 32: Seitenteil
- 34: erste Metallfolie
- 36: Längsseite
- 38: Schmalseite
- 40: Überlapp
- 42: erste Kunststoffbeschichtung
- 44: Boden
- 46: Rand
- 48: zweite Metallfolie
- 52: zweite Kunststoffbeschichtung
- 54: Verfahren
- 56: erster Arbeitsschritt
- 58: zweiter Arbeitsschritt
- 60: dritter Arbeitsschritt
- 62: vierter Arbeitsschritt
- 64: fünfter Arbeitsschritt

## Patentansprüche

1. Pouch-Gehäuse (28) einer Batterie (14), mit einem aus einer ersten Metallfolie (34) erstellten hohlzylindrischen Mittelteil (30), dessen Stirnseiten jeweils mittels eines Seitenteils (32) verschlossen sind, wobei die Seitenteile (32) jeweils aus einer zweiten Metallfolie (48) erstellte topfförmige, einen Rand (46) und einen Boden (44) aufweisende Tiefziehteile sind.

2. Pouch-Gehäuse (28) nach Anspruch 1, **dadurch gekennzeichnet, dass** die Ränder (46) umfangsseitig von dem Mitteilteil (30) umgeben sind und an diesem direkt anliegen.

3. Pouch-Gehäuse (28) nach Anspruch 2, **dadurch gekennzeichnet, dass** die Böden (44) bezüglich der Ränder (46) ins Innere des Mittelteils (30) versetzt sind.

4. Pouch-Gehäuse (28) nach einem der Ansprüche 1 bis 3, **dadurch gekennzeichnet, dass** die erste und zweite Metallfolie (34, 48) im Bereich der direkten mechanischen Anlage mit einer siegelfähigen ersten Kunststoffbeschichtung (42) versehen sind.

5. Pouch-Gehäuse (28) nach einem der Ansprüche 1 bis 4, **dadurch gekennzeichnet, dass** der Mittelteil (30) und die Seitenteile (32) an der Außenseite mit einer zweiten Kunststoffbeschichtung (52) versehen sind.

6. Pouch-Gehäuse (28) nach einem der Ansprüche 1 bis 5, **dadurch gekennzeichnet, dass** der Mittelteil (30) einen rechteckförmigen Querschnitt aufweist, wobei ein Überlapp (40) der ersten Metallfolie (34) sich an einer Schmalseite (38) befindet.

7. Pouch-Gehäuse (28) nach einem der Ansprüche 1 bis 6, **dadurch gekennzeichnet, dass** ein elektrischer Anschluss (26) zwischen einem der Seitenteile (32) und dem Mittelteil (30) hindurchgeführt ist.

8. Batterie (14) mit einem Pouch-Gehäuse (28) nach einem der Ansprüche 1 bis 7, in dem eine Batteriezelle (18) mit zwei Elektroden (20) und einem dazwischen angeordneten Separator (22) angeordnet ist.

9. Verfahren (54) zur Herstellung einer Batterie (14) nach Anspruch 8, bei dem
- eine Batteriezelle (18) mit zwei Elektroden (22) und einem dazwischen angeordneten Separator (20) bereitgestellt wird,
- um die Batteriezelle (18) ein erste Metallfolie (34) zur Herstellung eines hohlzylindrischen Mittelteils (30) geschlagen wird,
- aus einer zweiten Metallfolie (48) mittels Tiefziehens zwei Seitenteile (32) mit einem Rand (46) und einen Boden (44) erstellt werden, und
- der Mittelteil (30) an dessen Stirnseiten mittels jeweils eines der Seitenteile (32) verschlossen wird.
